# EUROPEAN PATENT APPLICATION

(11) **EP 2 355 490 A2**
(43) Date of publication of application: **10.08.2011**
(21) Application number: 10183071.9
(22) Date of filing: 30.09.2010
(51) Int. Cl.: H04N 5/232

(54) **Image capturing apparatus having remote control function**

(30) Priority: 09.02.2010 KR 20100011923
(71) Applicant: PANTECH CO., LTD., Seoul 121-792 (KR)
(72) Inventor: Yeom, Hyung Sik, Seoul 151-772 (KR); Kim, Nam Myung, Goyang-si, Gyeonggi-do 412-731 (KR); Kim, Sun Kyung, Goyang-si, Gyeonggi-do 412-730 (KR); Park, Sung Hwan, Gyeonggi-do 410-755 (KR); Byun, Kwang Ho, Seoul 157-010 (KR); Shin, Jung Shup, Seoul 122-020 (KR); Oh, Sang Guin, Gyeonggi-do 435-758 (KR); Lee, Jin Kyu, Gyeonggi-do 422-704 (KR); Lee, Hyo Young, Seoul 137-073 (KR)
(74) Representative: Herzog, Markus

(57) **Abstract**

A terminal includes an image input unit, an image output unit, and a controller to transmit image frames generated by the image input unit to the image output unit in real time if a preview mode is activated. If an object is selected within an image displayed on the screen of the image output unit, the controller identifies the selected object, detects an image frame, in which an object matched to the identified object is present, processes the detected image frame, and transmits the processed image frame to the image output unit so that an image can be edited before the photographed image is recorded.

## Description

### CROSS-REFERENCE TO RELATED APPLICATION

This application claims priority from and the benefit of Korean Patent Application No. 10-2010-0011923, filed on February 9, 2010, which is hereby incorporated by reference for all purposes as if fully set forth herein.

### BACKGROUND

### 1. Field

This disclosure relates to a terminal having a photograph function.

### 2. Discussion of the Background

In general, a terminal having a photograph function displays an image on a preview screen if a photograph mode is activated. If the photograph mode is activated, the terminal having a photograph function activates a preview mode and displays the image on the preview screen in real time, i.e., the screen displays processed data corresponding to an image as detected by an image sensor through a lens of a camera.

In a state in which a preview mode is activated, a user may activate a still image photograph mode and capture and record an image displayed on the screen in the preview mode. In addition, the user may activate a moving image photograph mode so as to capture and record a moving image from a time point when the moving image photograph mode is activated to a time point when the moving image photograph mode is inactivated, thereby recording peripheral sound together with the image displayed on the screen.

The terminal having such a photograph function has a recording function, a data storage function, a stored data retrieval function, a data communication function with an external device, such as a personal computer (PC), in addition to the photograph function. Recently, at least one of various functions, such as a telephone conversation function, a multimedia file play function of music and/or moving image or the like, a broadcast reception/transmission function, and a function for remotely controlling an electronic apparatus, such as a TV receiver, have been added. For example, the terminal having a photograph function may include a digital camera, a portable multimedia player (PMP), a mobile phone, a personal digital assistant (PDA), a smart phone, an MPEG Layer 3 player (MP3P), or the like.

However, in an existing terminal having a photograph function, only a recorded image may be read and edited with a separate image editing software tool.

In addition, in the existing terminal having a photograph function, in the case where a photograph mode is activated, in order to control a remotely controllable electronic apparatus, the photograph mode has to be stopped and switched to an electronic apparatus remote control mode. For example, if the remotely controllable electronic apparatus is present on a preview screen in a state of being turned on, the mode has to be switched in order to turn off the electronic apparatus.

### SUMMARY

Exemplary embodiments of the present invention provide a terminal having a photograph function, capable of providing an image editing service in a state in which a photographed image is displayed on a preview screen.

Exemplary embodiments of the present invention provide a terminal having a photograph function, capable of recognizing a virtual object displayed on a preview screen using an image recognition method and remotely controlling a real object corresponding to the recognized virtual object.

Additional features of the invention will be set forth in the description which follows, and in part will be apparent from the description, or may be learned by practice of the invention

An exemplary embodiment provides a terminal having a photograph function, the terminal including: an image input unit to generate image frames; an image output unit to display the image frames generated by the image input unit on a screen; and a controller to transmit the image frames generated by the image input unit to the image output unit in real time if a preview mode is activated, wherein, if an object is selected within an image displayed on the screen of the image output unit in the preview mode, the controller identifies the selected object, detects an image frame in which an object matched to the identified object is present, processes the detected image frame, and transmits the processed image frame to the image output unit.

An exemplary embodiment provides a terminal having a photograph function, the terminal including: a communication unit to perform wireless communication; an image input unit to generate image frames; an image output unit to display the image frames generated by the image input unit on a screen; a memory to store information about a wireless communication protocol matched to feature data; and a controller to transmit the image frames generated by the image input unit to the image output unit in real time if a preview mode is activated, wherein, if an object is selected within an image displayed on the screen of the image output unit, the controller extracts feature data of the selected object, retrieves a wireless communication protocol of an object matched to the extracted feature data from the memory, generates a remote control signal for object control using the retrieved wireless communication protocol, and transmits the generated remote control signal through the communication unit.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic block diagram showing the configuration of a terminal having a photograph function according to an exemplary embodiment.

FIG. 2, FIG. 3, FIG. 4, and 5 are diagrams illustrating a preview image displayed on a terminal having a photograph function according to an exemplary embodiment.

### DETAILED DESCRIPTION OF THE ILLUSTRATED EMBODIMENTS

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size and regions, and the like, of the drawing may be exaggerated for clarity.

Hereinafter, a terminal having a photograph function according to an exemplary embodiment will be described in detail with reference to the accompanying drawings.

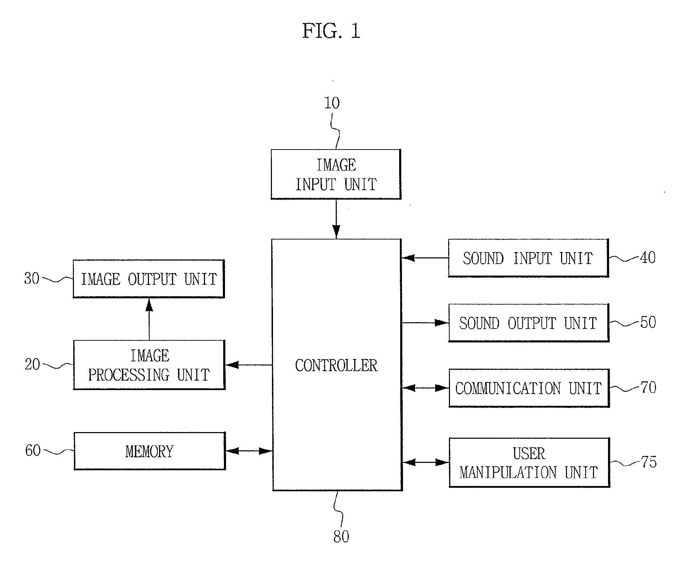

FIG. 1 is a schematic block diagram showing the configuration of a terminal having a photograph function according to an exemplary embodiment. Referring to FIG. 1, the terminal having a photograph function includes an image input unit 10, an image processing unit 20, an image output unit 30, a sound input unit 40, a sound output unit 50, a memory 60, a communication unit 70, a user manipulation unit 75, and a controller 80.

The image input unit 10 collects and processes an optical signal and converts the optical signal into an image signal. The image input unit 10 also processes the converted image signal in frame units so as to generate image frames. The image input unit 10 includes an image sensor for converting optical signals into analog image signals and a signal processing module for processing the analog image signals output from the image sensor and outputting digital signals. The image sensor may include, for example, a charge-coupled device (CCD) or complementary metal-oxide-semiconductor (CMOS) sensor. Depending on the type of image sensor, a digital-to-analog (D/A) converter (not shown) may be incorporated into the image sensor or may be a separate element.

The image processing unit 20 processes the image frames generated by the image input unit 10 according to the characteristics of the image output unit 30, such as a screen size of the image output unit 30. That is, the image processing unit 20 may include an image codec for coding or decoding image signals into a specific format suitable for the characteristics of the image output unit 30.

The image output unit 30 displays the image frames on a screen under the control of the controller 80 so as to display still images or moving images on the screen. For example, the image output unit 30 may include a liquid crystal display (LCD), an inorganic or organic light emitting diode (LED) display, with or without a touch screen, or the like. If the image output unit includes a touch screen, inputs similar to the user manipulation unit 75 may be performed. Throughout, a selected object 90 may be manipulated according to a touch input, a drag input, a multi-touch input, multiple touch inputs, or the like.

If a selected-object deletion mode is activated in a state in which a preview mode is activated, the image output unit 30 displays a preview image, in which a selected object 90 may be deleted, on the screen. While the preview image is displayed on the screen, the preview image may be stored in a buffer memory (not shown) associated with the image output unit. However, the preview image may not yet be stored in the memory 60 of the terminal.

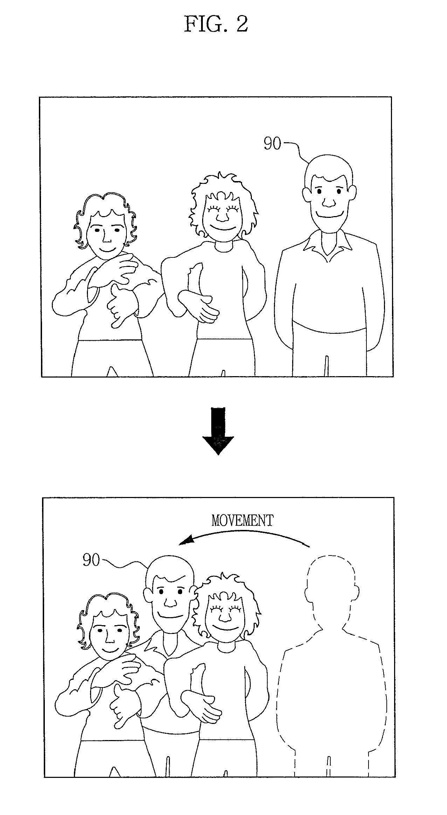

If a selected-object movement mode is activated in a state in which a preview mode is activated, the image output unit 30 displays a preview image, in which the position of a selected object 90 may be moved, on the screen, as shown in FIG. 2. Referring to FIG. 2, a user may select the object 90, i.e., an image of a person within the displayed preview image, and move the selected object 90 within the displayed preview image.

If a selected-object photograph mode is activated in a state in which a preview mode is activated, the image output unit 30 displays a preview image, in which only a selected object 90 is moved and a region excluding the selected object 90 is stopped or in a still state, on the screen.

If a selected-object enlargement/reduction mode is activated in a state in which a preview mode is activated, the image output unit 30 displays a preview image, in which only a selected object 90 is moved and enlarged/reduced and a region excluding the selected object 90 is stopped or in a still state, on the screen.

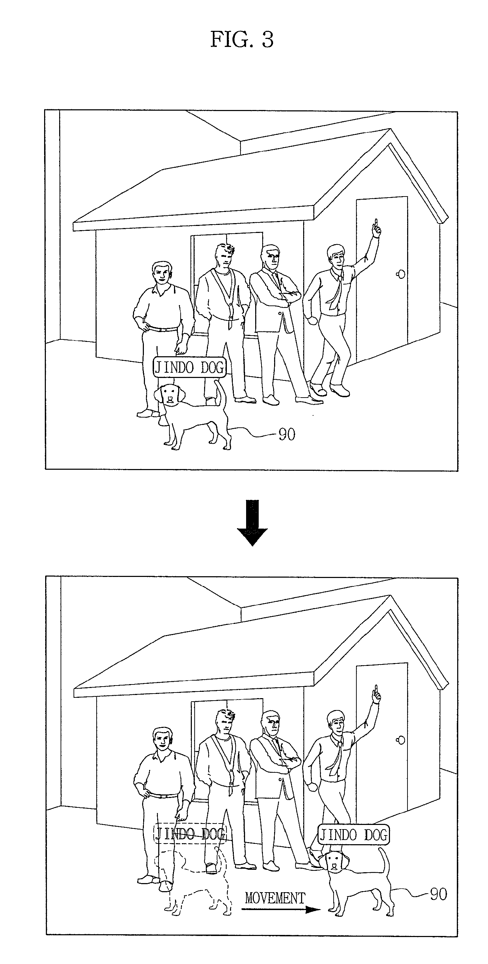

If a selected-object synthesis mode is activated in a state in which a preview mode is activated, the image output unit 30 displays a preview image, in which a text, i.e., "Jindo Dog", or image to be synthesized with the selected object 90 is moved according to movement of a selected object 90, on the screen, as shown in FIG. 3. Referring to FIG. 3, the text "Jindo Dog" may be selected and/or added to the preview image, synthesized with the selected object 90, and moved with the selected object 90.

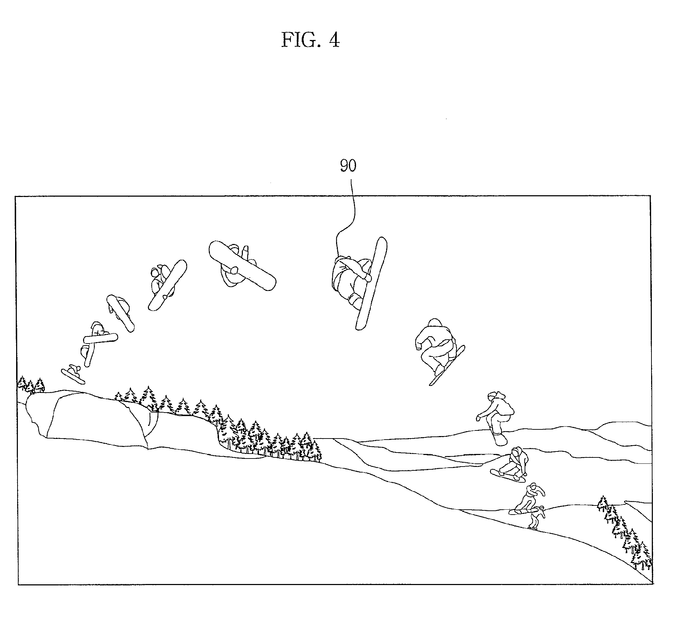

If a selected-object after-image mode is activated in a state in which a preview mode is activated, the image output unit 30 displays a preview image, in which only a selected object 90 is moved with the after-image thereof and a region excluding the selected object 90 is stopped, on the screen, as shown in FIG. 4. Referring to FIG. 4, the selected object 90, for example, a snow boarder, is moved while the region excluding the selected object 90 is stopped.

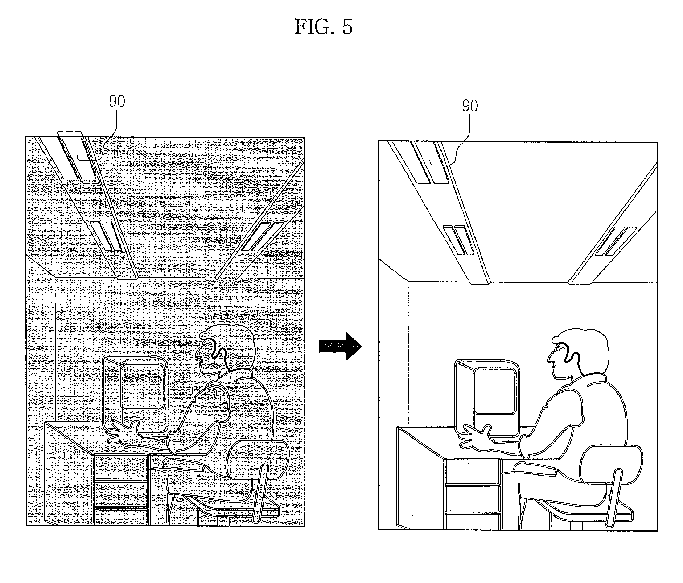

If an image characteristic change mode is activated in a state in which a preview mode is activated, the image output unit 30 displays a preview image having the same brightness as a selected object 90 on the screen, as shown in FIG. 5. Referring to FIG. 5, the brightness of the image may be changed to correspond, be the same as, or be similar to the brightness of the selected object 90.

Referring back to FIG. 1, the sound input unit 40 collects and processes sound and generates sound signals. For example, the sound input unit 40 may include a microphone, or the like.

The sound output unit 50 outputs the sound signals. For example, the sound output unit 50 may include a speaker, or the like.

The memory 60 stores data (e.g., a still image, a moving image, a sound, sound-associated data, and the like) and provides retrieval of the stored data to the controller 80. The memory 60 may store information about a sound signal waveform of voice information matched to feature data of an object and a wireless communication protocol.

The communication unit 70 performs wireless communication between the controller 80 and a wireless communication system, wireless communication between the controller 80 and another terminal, or wireless communication between the controller 80 and another terminal over a network. For example, the communication unit 70 may include a local area network (LAN) wireless communication module, a wireless Internet module, a broadcast reception module, a mobile communication module, or the like. The LAN communication module may include Bluetooth®, radio-frequency identification (RFID), infrared data association, ultra-wideband (UWB), and ZigBee® modules, and various wired communication ports.

The user manipulation unit 75 generates various input events for controlling a terminal operation mode according to the manipulation of the user. Meanwhile, the user manipulation unit 75 provides a user interface (UI) for user input, such as selection of an object and movement of the selected object 90 present in an image displayed on the screen of the image output unit 30. For example, the user manipulation unit 75 may include a keypad, a wheel switch, a touch pad, or the like. The image output unit 30 may include the user manipulation unit 75 such that the image output unit 30 may be a touch screen.

The controller 80 activates or inactivates various terminal operation modes according to an input event generated by the user manipulation unit 75.

The controller 80 activates a preview mode if a photograph mode is activated and then transmits image frames generated by the image input unit 10 to the image output unit 30 through the image processing unit 20 in real time. The image output unit 30 sequentially receives the image frames and displays the image frames on the screen.

If the user selects an object within an image displayed on the screen of the image output unit 30 in a state in which a preview mode is activated, the controller 80 identifies the selected object, detects an image frame in which an object matched to the selected object is present, processes the detected image frame to be suitable for a terminal operation mode, and transmits the processed image frame to the image output unit 30.

In particular, in the case in which a selected-object control mode is activated in a state in which a preview mode is activated, as the user selects an object within an image displayed on the screen of the image output unit 30 using the user manipulation unit 75, the controller 80 extracts feature data of the selected object 90, for example, the shape of a region occupied by the object, a pixel RGB value and the like, and stores the extracted feature data in the memory 60. Thereafter, the controller 80 detects an image frame, in which an object corresponding to the feature data stored in the memory 60 is present from the image frames generated by the image input unit 10. In addition, the controller 80 controls the object corresponding to the feature data stored in the memory 60 within the detected image frame, and transmits the image frame, in which the object is controlled, to the image output unit 30 through the image processing unit 20 or transmits image frame to another terminal through the communication unit 70.

The controller 80 may activate the selected-object control mode if the user selects an object within an image displayed on the screen of the image output unit 30 through the user manipulation unit 75. The selected-object control mode may include a selected-object deletion mode, a selected-object movement mode, a selected-object photograph mode, a selected object enlargement/reduction mode, a selected-object synthesis mode, a selected-object after-image mode, an image characteristic change mode, a selected-object voice/sound separation/removal mode, an object remote control mode, and the like.

In the case in which a selected-object deletion mode is activated in a state in which a preview mode is activated, if the user selects an object within an image displayed on the screen of the image output unit 30 through the user manipulation unit 75 in a user input standby state, the controller 80 extracts feature data of the selected object 90. The controller 80 stores the extracted feature data in the memory 60 and extracts an image frame in which an object corresponding to the feature data stored in the memory 60 is present from the image frames generated by the image input unit 10. In addition, the controller 80 deletes the object corresponding to the feature data stored in the memory 60 within the detected image frame and transmits the image frame in which the object is deleted to the image output unit 30 through the image processing unit 20 or transmits the image frame in which the object is deleted to another terminal through the communication unit 70.

The controller 80 fills a portion in which the object is deleted within the image frame with a pattern similar to an image pattern of a peripheral environment using a normalization method. For example, in order to fill the portion in which the object is deleted within the image frame with the pattern similar to the image pattern of the peripheral environment, RGB values of predetermined pixels surrounding the region occupied by the selected object 90 within the image frame may be used.

In the case in which a selected-object movement mode is activated in a state in which a preview mode is activated as shown in FIG. 2, if the user selects an object within an image displayed on the screen of the image output unit 30 through the user manipulation unit 75 and moves the selected object 90 to a specific position in a user input standby state, the controller 80 extracts feature data of the selected object 90 and checks the movement position of the selected object 90 on the screen. The controller 80 stores the extracted feature data and the movement position of the selected object 90 in the memory 60, detects an image frame in which an object corresponding to the feature data stored in the memory 60 is present from the image frames generated by the image input unit 10. The controller 80 moves the object corresponding to the feature data stored in the memory 60 to the movement position of the selected object 90 stored in the memory 60 within the detected image frame. Thereafter, the controller 80 transmits the image frame in which the object is moved to the image output unit 30 through the image processing unit 20 or transmits the image frame in which the object is moved to another terminal through the communication unit 70. The controller 80 fills a portion from which the object moves within the image frame with a pattern similar to an image pattern of a peripheral environment using a normalization method.

In the case in which a selected-object photograph mode is activated in a state in which a preview mode is activated, if the user selects an object within an image displayed on the screen of the image output unit 30 through the user manipulation unit 75 in a user input standby state, the controller 80 extracts feature data of the selected object 90, and stores the extracted feature data and a background image frame corresponding to any one of the image frames generated by the image input unit 10 in the memory 60. Thereafter, the controller 80 detects an image frame in which an object corresponding to the feature data stored in the memory 60 is present from the image frames generated by the image input unit 10. In addition, the controller 80 deletes a non-selected region within the detected image frame, and transmits the image frame in which the non-selected region is deleted to the image output unit 30 through the image processing unit 20 or transmits the image frame in which the non-selected region is deleted to another terminal through the communication unit 70. The non-selected region is a region excluding a region occupied by the object corresponding to the feature data stored in the memory 60 within the detected image frame. The controller 80 fills the deleted non-selected region within the image frame with a color using a normalization method or covers the background image frame stored in the memory 60 with the image frame in which the non-selected region is deleted.

If a preview image in which only the selected object is moved and the non-selected region excluding the selected object 90 is stopped is displayed on the screen of the image output unit 30, the controller 80 fills an undefined space generated between the selected object 90 and the non-selected region according to the movement of the selected object 90 with a pattern similar to an image pattern of a peripheral environment using a normalization method.

In the case in which a selected-object enlargement/reduction mode is activated in a state in which a preview mode is activated, if the user selects an object within an image displayed on the screen of the image output unit 30 through the user manipulation unit 75 and enlarges/reduces a size of the selected object 90 with a ratio in a user input standby state, the controller 80 extracts feature data of the selected object 90, and stores the extracted feature data, the enlargement/reduction ratio of the selected object 90, and a background image frame corresponding to any one of the image frames generated by the image input unit 10 in the memory 60. Thereafter, the controller 80 detects an image frame, in which an object corresponding to the feature data stored in the memory 60 is present from the image frames generated by the image input unit 10. In addition, the controller 80 enlarges/reduces the object corresponding to the feature data stored in the memory 60 within the detected image frame with the enlargement/reduction ratio stored in the memory 60, and deletes a region excluding the enlarged/reduced object, i.e., a non-selected region. The image frame in which the non-selected region is deleted is transmitted to the image output unit 30 through the image processing unit 20 or to another terminal through the communication unit 70. The controller 80 fills the deleted non-selected region within the image frame with a color using a normalization method or covers the background image frame stored in the memory 60 with the image frame in which the non-selected region is deleted.

In the case in which a selected-object synthesis mode is activated in a state in which a preview mode is activated as shown in FIG. 3, if the user selects an object within an image displayed on the screen of the image output unit 30 through the user manipulation unit 75 in a user input standby state, the controller 80 extracts feature data of the selected object 90, and stores the extracted feature data in the memory 60. Thereafter, the controller 80 detects an image frame in which an object corresponding to the feature data stored in the memory 60 is present from the image frames generated by the image input unit 10. In addition, the controller 80 checks the position (e.g., a 2-dimensional or 3-dimensional position coordinate) of the object corresponding to the feature data stored in the memory 60 within the detected image frame, and generates a new image frame in which a text or image to be synthesized is present at a position corresponding to the checked position of the object. Thereafter, the controller 80 synthesizes the generated new image frame with the detected image frame and transmits the synthesized image frame to the image output unit 30 through the image processing unit 20 or transmits the synthesized image frame to another terminal through the communication unit 70. The text or image to be synthesized may be directly input by the user through the user manipulation unit 75 or may be data previously stored in the memory 60.

In the case where a selected-object voice/sound separation/removal mode is activated in a state in which a preview mode is activated, if the user selects an object within an image displayed on the screen of the image output unit 30 through the user manipulation unit 75 in a user input standby state, the controller 80 extracts feature data of the selected object 90, and retrieves a sound signal waveform of voice information matched to the extracted feature data from the memory 60. Thereafter, the controller 80 extracts a sound signal having a waveform pattern matched to the retrieved sound signal waveform of the voice information from the sound signals generated by the sound input unit 40, separates/removes a voice or sound corresponding to the extracted sound signal, and transmits the sound signals generated by the sound input unit 40 through the sound output unit 50.

In the case where a selected-object after-image mode is activated in a state in which a preview mode is activated as shown in FIG. 4, if the user selects an object within an image displayed on the screen of the image output unit 30 through the user manipulation unit 75 in a user input standby state, the controller 80 extracts feature data of the selected object 90, and stores the extracted feature data and a background image frame corresponding to any one of the image frames generated by the image input unit 10 in the memory 60. Thereafter, the controller 80 detects an image frame in which an object corresponding to the feature data stored in the memory 60 from the image frames generated by the image input unit 10 and sequentially synthesizes the detected image frame with the background image frame stored in the memory 60. Here, the synthesis is performed so that the frame has an interval. The controller 80 transmits the synthesized image frame to the image output unit 30 through the image processing unit 20 or transmits the synthesized image frame to another terminal through the communication unit 70. The controller 80 may sequentially remove the image frame synthesized with the background image frame as a predetermined time is passed from a time point if the image frame is synthesized with the background image frame such that the image frame synthesized with the background image disappears with the passage of time.

In the case where an image characteristic change mode is activated in a state in which a preview mode is activated as shown in FIG. 5, if the user selects an object within an image displayed on the screen of the image output unit 30 through the user manipulation unit 75 in a user input standby state, the controller 80 extracts feature data of the selected object 90, and stores the extracted feature data in the memory 60. Thereafter, the controller 80 detects an image frame, in which an obj ect corresponding to the feature data stored in the memory 60 is present from the image frames generated by the image input unit 10, and changes the overall characteristics (e.g., color, brightness, and the like) of the detected image frame so as to be suitable for the feature data stored in the memory 60. Alternatively, the controller 80 changes the characteristics (e.g., color, brightness, and the like) of an object present in the detected image frame so as to be suitable for the feature data stored in the memory 60 and transmits the changed image frame to the image output unit 30 through the image processing unit 20 or transmits the changed image frame to another terminal through the communication unit 70.

In the case where an object remote control mode is activated in a state in which a preview mode is activated, if the user selects an object within an image displayed on the screen of the image output unit 30 through the user manipulation unit 75 in a user input standby state, the controller 80 extracts feature data of the selected object 90. Thereafter, the controller 80 retrieves a wireless communication protocol of an object matched to the extracted feature data from the memory 60, generates a remote control signal for object control using the retrieved wireless communication protocol, and transmits the generated remote control signal through the communication unit 70. Here, a real object corresponding to the selected object 90, for example, an electronic apparatus such as a TV receiver, includes a specific wireless communication protocols such as an infrared reception communication module. Such an electronic apparatus receives the remote control signal transmitted from the terminal and performs a predetermined operation using the received remote control signal.

Among the image frames generated by the image input unit 10, an image frame in which the object matched to the selected object, i.e., the object corresponding to the feature data stored in the memory 60, is not present may be directly transmitted by the controller 80 to the image output unit 30 through the image processing unit 20 transmits.

In addition, if an image frame is received from another terminal through the communication unit 70 in a state in which a preview mode is activated, the controller 80 transmits the received image frame to the image output unit 30 through the image processing unit 20.

According to exemplary embodiments, an image editing service may be provided in a state in which a photographed image is displayed on a preview screen, and the image can be edited before the photographed image is recorded in a memory. Thus, a user does not need to perform an image editing operation using a separate image editing tool after the photographed image is recorded.

In addition, according to exemplary embodiments, a virtual object displayed on a preview screen is recognized by an image recognition method and a real object corresponding to the recognized virtual object may be remotely controlled. Thus, an object displayed on a screen can be controlled without changing a mode in a state in which a preview mode is activated.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A terminal includes an image input unit, an image output unit, and a controller to transmit image frames generated by the image input unit to the image output unit in real time if a preview mode is activated. If an object is selected within an image displayed on the screen of the image output unit, the controller identifies the selected object, detects an image frame, in which an object matched to the identified object is present, processes the detected image frame, and transmits the processed image frame to the image output unit so that an image can be edited before the photographed image is recorded.

## Claims

1. A terminal having a photograph function, the terminal comprising:
an image input unit to generate image frames;
an image output unit to display the image frames generated by the image input unit on a screen; and
a controller to transmit the image frames generated by the image input unit to the image output unit in real time if a preview mode is activated,
wherein, if an object is selected within an image displayed on the screen of the image output unit in the preview mode, the controller
either identifies the selected object, detects an image frame in which an object matched to the identified object is present, processes the detected image frame, and transmits the processed image frame to the image output unit,
or extracts feature data of the selected object, retrieves a wireless communication protocol of an object matched to the extracted feature data from a memory adapted to store information about a wireless communication protocol matched to feature data, generates a remote control signal for object control using the retrieved wireless communication protocol, and transmits the generated remote control signal through a communication unit adapted to perform wireless communication.

2. The terminal according to claim 1, wherein, if a selected-object control mode is activated, the controller extracts and stores feature data of the selected object, detects an image frame in which an object matched to the stored feature data is present, controls the object matched to the stored feature data within the detected image frame, and transmits the image frame in which the object is controlled to the image output unit,
and, preferably, if the object is selected within the image displayed on the screen of the image output unit, the controller activates the selected-object control mode.

3. The terminal according to claim 1 or 2, wherein, if the object is selected within the image displayed on the screen of the image output unit, the controller extracts and stores feature data of the selected object, detects an image frame in which an object matched to the stored feature data is present, deletes the object matched to the stored feature data within the detected image frame, and transmits the image frame from which the object is deleted to the image output unit,
and, preferably, the controller fills a portion from which the object is deleted within the image frame with a pattern similar to an image pattern of a peripheral environment using a normalization method.

4. The terminal according to any of claims 1 to 3, wherein, if the object is selected within the image displayed on the screen of the image output unit and the selected object is moved from a first position to a second position, the controller extracts feature data of the selected object, checks a movement position of the selected object on the screen, stores the feature data and the movement position of the selected object, detects an image frame in which an object matched to the stored feature data is present, moves the object matched to the stored feature data within the detected image frame to the stored movement position of the selected object, and transmits the image frame in which the object is moved to the image output unit, the first position corresponding to an original position of the selected object in the image, and the second position corresponding to the movement position,
and, preferably, the controller fills a portion from which the selected object is move with a pattern similar to an image pattern of a peripheral environment using a normalization method.

5. The terminal according to any of claims 1 to 4, wherein, if the object is selected within the image displayed on the screen of the image output unit, the controller extracts feature data of the selected object, stores the extracted feature data and a background image frame corresponding to an image frame generated by the image input unit, detects an image frame in which an object matched to the stored feature data is present, deletes a non-selected region excluding a region occupied by the object matched to the stored feature data within the detected image frame, and transmits the image frame in which the non-selected region is deleted to the image output unit.

6. The terminal according to claim 5, wherein the controller fills the deleted non-selected region within the image frame with a color using a normalization method or covers the stored background image frame with the image frame in which the non-selected region is deleted.

7. The terminal according to claim 6, wherein, if a preview image in which only the selected object is moved and the non-selected region excluding the selected object is stopped is displayed on the screen of the image output unit, an undefined space generated between the selected object and the non-selected region according to the movement of the selected object is filled with a pattern similar to an image pattern of a peripheral environment using a normalization method.

8. The terminal according to any of claims 1 to 7, wherein, if the object is selected within the image displayed on the screen of the image output unit and the selected object is enlarged or reduced according to a ratio, the controller extracts feature data of the selected object, stores the extracted feature data, the enlargement/reduction ratio of the selected object, and a background image frame corresponding to an image frame generated by the image input unit, detects an image frame in which an object matched to the stored feature data is present, enlarges or reduces the object matched to the stored feature data within the detected image frame by the stored enlargement/reduction ratio, deletes a non-selected region excluding the enlarged or reduced object, and transmits the image frame in which the non-selected region is deleted to the image output unit, and, preferably, the controller fills the deleted non-selected region within the image frame with a color using a normalization method or covers the stored background image frame with the image frame in which the non-selected region is deleted.

9. The terminal according to any of claims 1 to 8, wherein, if the object is selected within the image displayed on the screen of the image output unit, the controller extracts feature data of the selected object, stores the extracted feature data, detects an image frame in which an object matched to the stored feature data is present, checks a position of the object matched to the stored feature data within the detected image frame, generates a new image frame in which a text or image to be synthesized is present at a position corresponding to the checked position of the object, synthesizes the generated new image frame with the detected image frame, and transmits the synthesized image frame to the image output unit.

10. The terminal according to any of claims 1 to 9, wherein, if the object is selected within the image displayed on the screen of the image output unit, the controller extracts feature data of the selected object, stores the extracted feature data and a background image frame corresponding to an image frame generated by the image input unit, detects an image frame in which an object matched to the stored feature data is present, synthesizes the detected image frame with the stored background image frame so that the frame has an interval, and transmits the synthesized image frame to the image output unit,
and, preferably, the controller sequentially removes the image frame synthesized with the background image frame.

11. The terminal according to claim 1, wherein, if the object is selected within the image displayed on the screen of the image output unit, the controller extracts feature data of the selected object, stores the extracted feature data, detects an image frame in which an object matched to the stored feature data is present, changes characteristics of the detected image frame, and transmits the image frame having the changed characteristics to the image output unit,
and, preferably, the controller changes the characteristics of an object present in the detected image frame and transmits the image frame in which the characteristics of the object are changed to the image output unit.

12. The terminal according to any of claims 1 to 11, further comprising:
a sound input unit to generate sound signals;
a sound output unit to output the sound signals generated by the sound input unit; and
a memory to store information about a sound signal waveform of sound information matched to feature data of an object,
wherein, if the object is selected within the image displayed on the screen of the image output unit, the controller extracts feature data of the selected object,
retrieves a sound signal waveform of sound information matched to the extracted feature data from the memory, extracts a sound signal having a waveform pattern matched to the retrieved sound signal waveform of the sound information from the sound signals generated by the sound input unit, and separates/removes sound corresponding to the extracted sound signal.

13. The terminal according to any of claims 1 to 12, further comprising a communication unit to perform wireless communication between the controller and a wireless communication system, wireless communication between the controller and another terminal, and/or wireless communication between the controller and another terminal.
